# EUROPEAN PATENT APPLICATION

(11) **EP 1 400 798 A1**
(43) Date of publication of application: **24.03.2004**
(21) Application number: 02425556.4
(22) Date of filing: 10.09.2002
(51) Int. Cl.: G01M 3/20, G01M 3/22

(54) **Leak detection system in a vacuum installation and joint for use in the system**

(71) Applicant: STMicroelectronics S.r.l., 20041 Agrate Brianza (Milano) (IT)
(72) Inventor: Somboli, Fabio, 24040 Boltiere (IT)
(74) Representative: Maggioni, Claudio

(57) **Abstract**

System for the automatic detection of leaks in a vacuum installation comprising air-tightness measurement points (11, 21), a measurement gas source (10), means for conveying the measurement gas to the measurement points and means (14) for detecting the presence of the measurement gas inside the vacuum installation. The means for conveying the measurement gas to the measurement points comprise ducts (1, 2, 3, 4, 5, 6, 7, 8) that connect the measurement gas source to the measurement points. The system also comprises means (18, 19, 20) for controlling the flow of the measurement gas in the ducts.

The leak detection becomes more accurate if the air-tightness measurement points of the vacuum installation comprise joints of a new type between tubes. Each joint comprises two juxtaposable flanges, each integral with an end of a tube, means for fixing the two juxtaposed flanges and sealing means interposed between the two juxtaposed flanges. At least one of the two flanges comprises an internal duct (30) of which an input end (29) can be connected to a measurement gas source (10) and at least one output end (31) that opens into a zone of the flange outside the sealing means.

## Description

The present invention concerns a system for detecting leaks in a vacuum installation as described in the preamble of Claim 1 hereinbelow and a joint that can be used in such a system as described in the preamble of Claim 6.

A vacuum installation generally comprises an air-tight vacuum chamber that may have various shapes and sizes and in which the vacuum is created. A vacuum chamber serves for carrying out scientific experiments and for realizing such production processes as, for example, lyophilization processes and metal depositions. The vacuum within the chamber is created by a vacuum pump connected to the chamber by means of an air-tight tube that, for reasons bound up with the parts that make up the installation, may be realized by assembling a series of tube segments of different shapes and lengths with the help of air-tight joints. The ends of the tube are connected to the vacuum chamber and the pump by means of other air-tight joints. The pump creates the vacuum both in the vacuum chamber and the air-tight tube.

A vacuum installation will be reliable in all operating conditions if any leaks that degrade its performance can be periodically detected and repaired. Looking for leaks in vacuum installations is therefore a fundamental activity for the research laboratories and industries that utilize these installations.

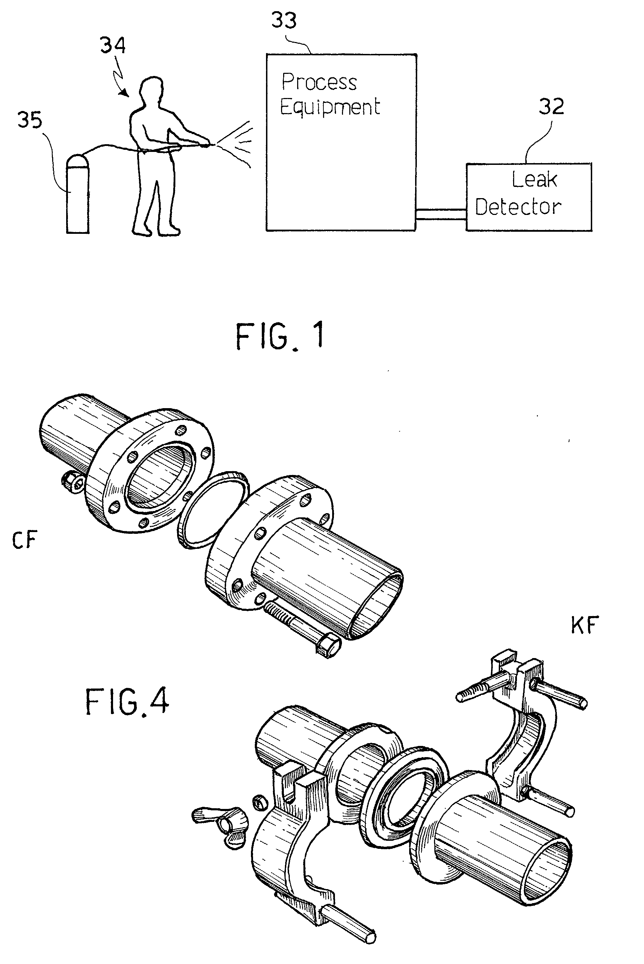

As things stand at present, the most efficient method of detecting leaks in vacuum installations utilizes a "leak detector" constituted principally by a sensor, a mass spectrometer for example, which is calibrated for detecting the presence of a measurement gas (usually helium), electronic equipment for carrying out the detection operation and the means necessary for creating the vacuum within the installations (a vacuum pump, for example). As schematically shown in Figure 1, a leak detector 32 is connected to process equipment 33 that represents an installation operated under vacuum. When seeking to detect leaks of the process equipment, an operator 34 provided with a helium cylinder 35 and a distribution nozzle sprays the measurement gas against the points of the equipment where perfect air-tightness cannot always be guaranteed, for example, the joints, the valves and all the parts that may deteriorate with the passage of time. When a given point is not perfectly air-tight, the pressure difference between the outside and the inside of the process equipment causes a certain quantity of the measurement gas to pass inside the equipment. The measurement gas then spreads and reaches the leak detector, i.e. the mass spectrometer, which provides a measure of the helium concentration, from which it is possible to deduce information about the tightness of the joints and the other points onto which the measurement gas is sprayed. The principal drawback of the procedure that has just been described concerns the phase in which the operator sprays the measurement gas: since this operation is carried out wholly by hand, it is rather inaccurate and not readily repeatable. Indeed, the flow of measurement gas sprayed onto a given point of the installation at different moments of time depends on the sensitivity of the operator and may therefore vary in quantity. Furthermore, the points where the measurement gas has to be sprayed are often not easily accessible for the operator, because the joints to be checked may be situated in narrow spaces or at a certain height.

The present invention therefore aims primarily at providing a system for detecting leaks in vacuum installations capable of overcoming the limitations associated with the manual procedure described above and, more particularly, a system capable of improving the reliability and repeatability of the leak detection procedure and also to make it easier to carry out this procedure.

Another purpose of the invention is to make available an air-tight joint that can be advantageously utilized in a leak detection system in accordance with the invention.

These aims are achieved by realizing the leak detection system and the joint defined in general terms in, respectively, Claim 1 and Claim 6 hereinbelow.

The invention will be more readily understood from the detailed description about to be given of a particular embodiment thereof, which is to be considered as an example and not limitative in any way, said description making reference to the attached drawings of which:
- Figure 1 schematically illustrates a manual procedure for detecting leaks in a vacuum installation,
- Figure 2 schematically illustrates a vacuum installation with an automatic leak detection system in accordance with the invention,
- Figure 3 schematically illustrates a device for distributing measurement gas to the various points forming part of the system of Figure 2,
- Figure 4 shows a perspective view of two joints of the known type,
- Figure 5 shows a perspective view of a joint in accordance with the invention,
- Figure 6a is a section along an axial plane of a joint in accordance with the invention,
- Figure 6b is a section along a transverse plane B-B of a joint in accordance with the invention, and
- Figure 6c is a section along a transverse plane C-C of a joint in accordance with the invention.

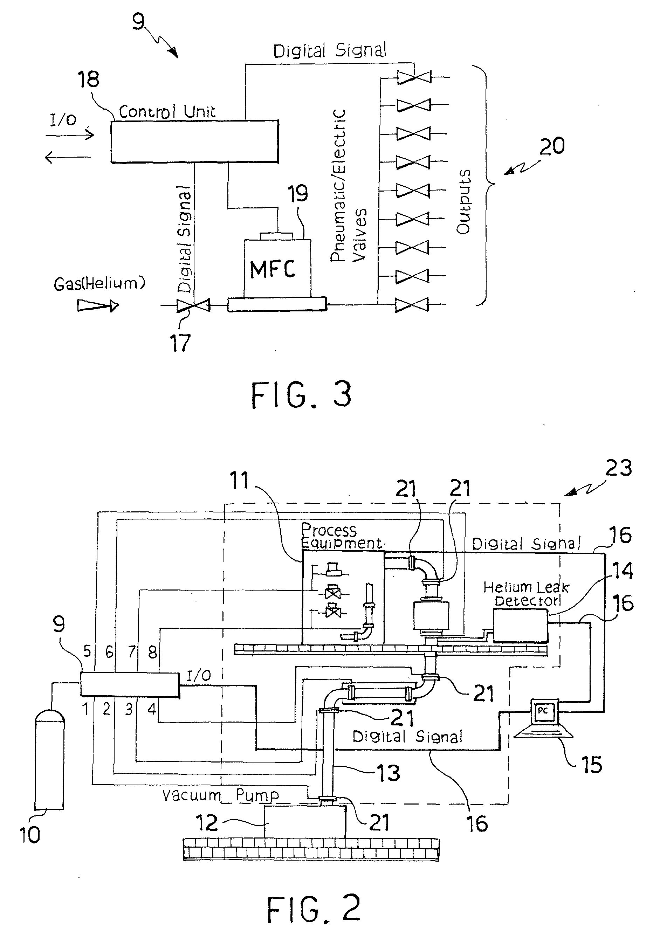

As can been in Figure 2, the automatic leak detection system of a vacuum installation, indicated as a whole by the reference number 23, comprises a device 9 that has the function of distributing the measurement gas (helium) from a measurement gas source 10 (a gas cylinder) to a multiplicity of points of the installation, hereinafter referred to as the measurement points, that are deemed to be critical, such as joints, valves or parts liable to break, and which therefore have to be checked to verify their air-tightness. A process equipment 11, which comprises vacuum chambers, valves and joints, is connected to a vacuum pump 12 by means of a tube 13 made up of tube sections of various shapes and sizes that are connected to each other by means of air-tight joints 21. Tube 13, in its turn, is connected to a helium leak detector, which in this particular case happens to be a mass spectrometer, by means of a tube 22 having a smaller section. Ducts for the distribution of the measurement gas (1, 2, 3, 4, 5, 6, 7, 8) connect the distribution device 9 to the measuring points of the system, which are constituted by the air-tight joints, the joints and valves of the process equipment 11, but also the air-tight joints 21 of the tube 13. The functioning of the entire system is controlled by an electronic processor (PC) 15 by means of digital signals travelling along lines 16 that connect said processor 15 to the gas distribution device 9, the helium leak detector 14 and the process equipment 11.

The structure of the measurement gas distribution device 9 is shown in greater detail in Figure 3, where one can note a control unit 18 of the electronic type that exchanges information with the processor 15 by means of digital input and output signals (I/O). By means of an appropriate digital signal, the control unit 18 controls the opening and closing of an electromagnetic valve 17 that permits the measurement gas to pass from the source (not shown in Figure 3) to a flow controller (MFC) 19 and thence to a multiplicity of electromagnetic valves 20. The electromagnetic valves 20, which constitute the outlets of the distribution device 9, have their opening and closing controlled by means of a digital signal sent out by the control unit 18. The flow controller 19 is likewise controlled by the control unit 18.

With the help of appropriate software, the described system makes it possible to realize completely automatic leak search sequences for the vacuum installation.

At the beginning of each leak search cycle, the ducts (1, 2, 3, 4, 5, 6, 7, 8) connected to the output valves 20 of the measurement gas distribution device 9 are connected to the chosen measurement points and the installation 23 to be tested is completely evacuated by means of the vacuum pump 12. Thereafter the processor 15 sends a digital control signal to the control unit 18, which thereupon opens the electromagnetic valve 17 and, acting on the flow controller 19, regulates the quantity of measurement gas to be applied to each measurement point. The measurement points of which the air-tightness is to be tested are selected by sequentially opening and closing the electromagnetic valves 20 corresponding to them and letting predetermined quantities of measurement gas (which may also be different for the various measurement points) flow through the appropriate ducts. The verification of the air-tightness of the measurement points of the vacuum installation is carried out by analyzing one point at a time: when leaks have formed at the measurement point under consideration, the gas penetrates into the vacuum installation 23 and reaches the helium leak detector 14, which provides a measure of the quantity of gas detected. The measurements carried out by the helium leak detector at each cycle for all the measurement points are sent to the electronic processor 15 in the form of digital signals and stored there. The data obtained in this manner make it possible to identify the points of the installation at which losses occur and to determine the size of the leaks that have formed there and can be compared with the results of previous measurements, for example on the occasion of the acceptance tests of the installation or after a preventive maintenance overhaul.

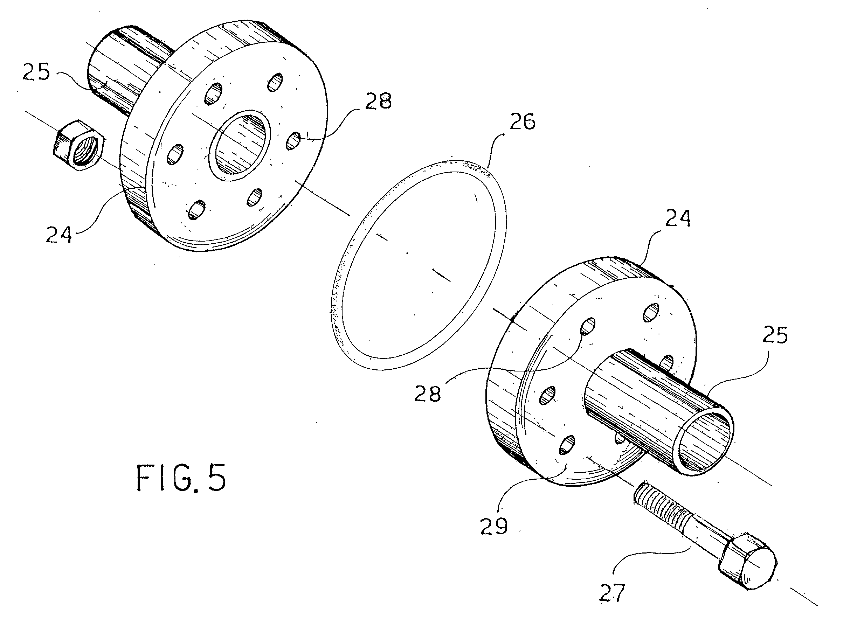

It is important to note that with the system according to the invention the measurement gas is not sprayed in a not readily controllable manner in the vicinity of the air-tight joints or the valves of the vacuum installation 23, as is the case when the manual method is used, but is injected in very accurately determined quantities at well defined points of the joints and the valves. As far as the joints are concerned, it is necessary to modify the structure of the commercially available joints or construct new joints specifically designed for the system in accordance with the invention. The CF joint and the KF joint shown in Figure 4 are two known air-tight joints that are commonly used for connecting, for example, two tube segments. The CF joint consists of two metal collars, commonly known as flanges, that extend from the ends of two adjacent tube segments and a gasket ring (usually made of copper). The gasket ring is hermetically closed between the flanged ends of the two tube segments by means of bolts passing through equidistant holes arranged in the flanges. The term flange is often used to indicate the entire joint. In the KF joint a central ring made of metallic material - which sustains an O-ring made of elastomeric material - is hermetically closed between the ends of two tube segments provided with metal flanges by means of a dividable closure ring and bolts. The CF joint guarantees better air-tightness than the KF joint in extreme vacuum conditions.

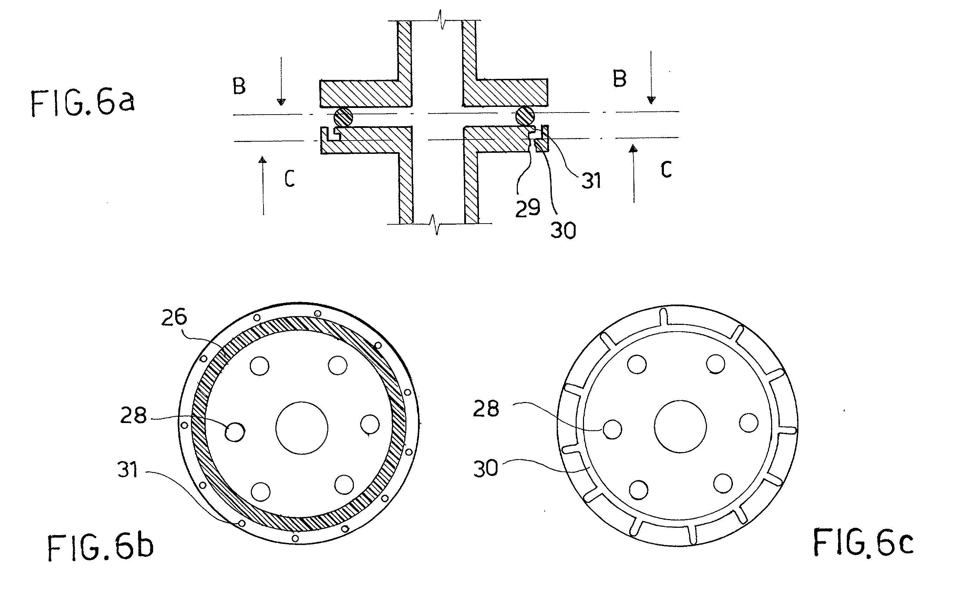

A joint in accordance with the invention is shown in Figure 5 and comprises two flanges 24 integral with the respective ends of two tube segments 25. The two flanges 24 are joined to each other by means of bolts 27 passing through holes 28 arranged equidistantly around the flanges. A gasket ring 26 placed between the two flanges 24 assures the air-tightness of the joint. Unlike the known joints, the new joint comprises an internally threaded socket 29 (Figures 5, 6a) on the external surface of one of the flanges 24 intended to receive the threaded end of one of the ducts (1, 2, 3, 4, 5, 6, 7, 8). Furthermore, the new joint also comprises a circular channel 30 (visible in Figure 6c), inside the flange 24, that communicates with the socket 29 and a multiplicity of nozzles 31 (Figure 6b), that make the circular channel communicate with the surface of the flange 24 adjacent to the other flange. The nozzles 31 terminate on the outside of the gasket ring 26 and are uniformly distributed along the external part of the flange.

During a leak detection cycle the measurement gas is injected into the joint through the corresponding duct inserted in the socket 29 and reaches the circular channel 30 inside the flange 24, where it spreads and reaches the nozzles 31. The nozzles 31 distribute the measurement gas in a uniform and calibrated manner into the zone comprised between the two flanges 24 outside the gasket ring 26, thus rendering possible an accurate determination of the losses. The described joint can be produced either by starting from CF joints and carrying out the mechanical processing operations needed to create the socket, the circular channel and the nozzles or can be designed as an *ex novo* product.

The system for the automatic detection of leaks described in this embodiment of the invention has numerous advantages. First of all, a known quantity of measurement gas is always sprayed onto each measurement point of the installation; in contrast with the manual method, this operation is repeatable and the gas spray becomes uniformly distributed at the measurement points. Furthermore, when the measurement points of the installation are not readily accessible, the system in accordance with the invention assures maximum practicalness and maximum safety for the operator, because it does not require the operator to gain direct access to the measurement points. For each leak detection cycle, moreover, it is possible for the most appropriate flow rate of the measurement gas to be experimentally determined for each application. Since the detection operation is automatic, it is more comfortable and quicker than the manual method and assures control of all the measurement points: indeed, it is impossible for some points to be forgotten, as may well happen during the manual operation. Lastly, the automatic operation consumes a smaller quantity of measurement gas than the manual operation.

Although only a single embodiment of the present invention has here been illustrated and described, it is evident that numerous variants are possible within the ambit of the underlying inventive concept. For example, the leak detector 14 could be connected to the vacuum installation at some point other than the one shown in Figure 2 or, in case of very large installations, several leak detectors could be provided for a single plant, preferably all connected to the same electronic processor. Furthermore, the system does not have to be completely automatic: in this case the measurement gas distribution device 9 (connected to the source 10) would be connected only to the measurement points of a vacuum installation (by means of the outlets 20 and the appropriate ducts) and to a leak detector (by means of a data line). In that case the operator would still be able to carry out a leak detection cycle for the installation by acting on the appropriate controls (knobs, pushbuttons) to steer the control unit 18. The advantages obtained in this case are similar to those previously listed as far as the repeatability, accuracy and speed of the leak detection operation is concerned, but it would no longer be possible to compare the data of successive leak detection cycles or to program these cycles as in the case of fully automatic detection. Lastly, the system could be realized as an integral part of a processing apparatus: in that case the electronic processor could be the same as the one used to control the processing apparatus.

## Claims

1. A leak detection system in a vacuum installation comprising
• air-tightness measurement points (11, 21),
• a measurement gas source (10)
• means for conveying the measurement gas to the measurement points, and
• means (14) for detecting the presence of the measurement gas inside the vacuum installation,
**characterized in that**
• the means for conveying the measurement gas to the measurement points comprise ducts (1, 2, 3, 4, 5, 6, 7, 8) that connect the measurement gas source to the measurement point, and
that it further comprises
• means (18, 19, 20) for controlling the flow of the measurement gas in the ducts.

2. A system in accordance with Claim 1, wherein the means for controlling the flow of the measurement gas in the ducts comprise an electromagnetic valve (20) for each duct, a flow controller (19) and control means (15, 16, 18) for selectively opening and closing the electromagnetic valves and regulating the flow controller.

3. A system in accordance with Claim 2, wherein the control means for opening and closing the electromagnetic valves (20) and regulating the flow controller (19) comprise a control unit (18) and means (15, 16) for the remote control of the system.

4. A system in accordance with Claim 3, wherein the means for the remote control of the system comprise an electronic processor (15) and digital signal lines (16).

5. A system in accordance with Claim 3 or Claim 4, wherein the means (14) for detecting the presence of measurement gas inside the vacuum installation are connected to the means (15, 16) for the remote control of the system.

6. A joint between two tubes (25) of a vacuum installation comprising
• two juxtaposable flanges (24), each integral with an end of one of the two tubes,
• means (27, 28) for fixing the two juxtaposed flanges, and
• sealing means (26) interposed between the two juxtaposed flanges,
**characterized in that** at least one of the two flanges comprises an internal duct (30) of which an input end (29) can be connected to a measurement gas source (10) and at least one output end (31) that opens into a zone of the flange outside the sealing means.

7. A joint in accordance with Claim 6, wherein the internal duct (30) comprises a circular channel provided with a threaded socket (29) as input end and a multiplicity of nozzles (31) as output ends uniformly distributed over the outer part of the flange (24).
